# EUROPEAN PATENT APPLICATION

(11) **EP 4 840 380 A1**
(43) Date of publication of application: **18.11.2026**
(21) Application number: 25736437.2
(22) Date of filing: 06.01.2025
(51) Int. Cl.: A47L 11/24

(54) **CLEANING ROBOT CONTROL METHOD AND APPARATUS, AND MEDIUM AND ELECTRONIC DEVICE**

(30) Priority: 05.01.2024 CN 202410025247
(71) Applicant: Beijing Roborock Technology Co., Ltd., Beijing 102206 (CN)
(72) Inventor: SUN, Lei, Beijing 102206 (CN)
(74) Representative: Maiwald GmbH
(86) International application number: PCT/CN2025/070759
(87) International publication number: WO 2025/146198

(57) **Abstract**

A cleaning robot control method, a cleaning robot control apparatus, a computer-readable storage medium, and an electronic device. The method comprises: in response to detecting that a cleaning robot enters a corner area, controlling the cleaning robot to extend a retractable cleaner, wherein the corner area is an area determined on the basis of an included angle formed by intersecting edges of two obstacles; and controlling the cleaning robot to move within the corner area, and using the retractable cleaner to clean the corner area during the movement process.

## Description

### CROSS-REFERENCE TO RELATED APPLICATION

The present disclosure claims priority to Chinese Patent Application No. 202410025247.2 filed on January 5, 2024, the content of which is incorporated herein by reference in its entirety.

### TECHNICAL FIELD

The present disclosure relates to the field of smart homes, in particular to a method for controlling a cleaning robot, an apparatus for controlling a cleaning robot, a computer-readable storage medium, and an electronic device.

### BACKGROUND

In recent years, with the rapid development of computer technology and artificial intelligence science, intelligent robot technology has gradually become a hotspot in the research field of modern robotics. Among intelligent robots, the cleaning robot, as one of the most practical types, may rely on a certain degree of artificial intelligence to automatically complete floor cleaning work.

Currently, during a cleaning process, the cleaning robot is unable to effectively clean the included angle areas formed by obstacles such as wall corners, resulting in poor cleaning effects of the cleaning robot.

How to accurately and effectively clean the included angle areas to improve the cleaning efficiency of the cleaning robot is an urgent problem to be solved in the related art.

### SUMMARY

An objective of the present disclosure is to provide a method for controlling a cleaning robot, an apparatus for controlling a cleaning robot, a computer-readable storage medium, and an electronic device, to solve the problem in the related art that an included angle area cannot be effectively cleaned. Specific solutions are as follows.

According to the specific embodiments of the present disclosure, in a first aspect, the present disclosure provides a method for controlling a cleaning robot. The cleaning robot includes an extendable cleaner, and a first projection of the extendable cleaner on a horizontal plane when the extendable cleaner is extended is at least partially located outside a second projection of a body of the cleaning robot on the horizontal plane. The method includes: controlling, in response to detecting that the cleaning robot enters an included angle area, the cleaning robot to extend the extendable cleaner, where the included angle area is an area determined based on an included angle formed by intersection of two obstacle edges; and controlling the cleaning robot to move within the included angle area and clean the included angle area by means of the extendable cleaner during a moving process.

In an exemplary embodiment of the present disclosure, controlling, in response to detecting that the cleaning robot enters the included angle area, the cleaning robot to extend the extendable cleaner includes: controlling the cleaning robot to extend the extendable cleaner in response to detecting that the included angle formed by the intersection of the two obstacle edges exists in a to-be-cleaned area, and distances between the cleaning robot and the two obstacle edges are both less than a reference dimension of the cleaning robot.

In an exemplary embodiment of the present disclosure, the body of the cleaning robot is circular, and the reference dimension is a diameter of the body; or the body of the cleaning robot is polygonal, and the reference dimension is a length of one side of the body.

In an exemplary embodiment of the present disclosure, the included angle formed by the intersection of the two obstacle edges is an included angle within a preset angle range.

In an exemplary embodiment of the present disclosure, controlling the cleaning robot to move within the included angle area includes: controlling the cleaning robot to move within the included angle area at a first movement speed, where the first movement speed is less than a second movement speed of the cleaning robot outside the included angle area.

In an exemplary embodiment of the present disclosure, the method also includes: controlling, in response to determining that the cleaning robot needs to rotate within the included angle area, the cleaning robot to rotate at a first rotation speed, where the first rotation speed is less than a second rotation speed of the cleaning robot outside the included angle area.

In an exemplary embodiment of the present disclosure, the method also includes: acquiring, before issuing a first control instruction, a first electrical signal value used for controlling the extendable cleaner, where the first control instruction is used for controlling the cleaning robot to extend the extendable cleaner; monitoring, during a process of extending the extendable cleaner, a second electrical signal value used for controlling the extendable cleaner; and determining, in response to determining that a difference between the second electrical signal value and the first electrical signal value reaches a preset threshold, that the extendable cleaner has an extension abnormality, and controlling the cleaning robot to retract the extendable cleaner and extend the extendable cleaner again.

In an exemplary embodiment of the present disclosure, the method also includes: disabling, in response to determining that the extension abnormality exists in all M consecutive extensions of the extendable cleaner, extension of the extendable cleaner.

In an exemplary embodiment of the present disclosure, the method also includes: controlling, in response to a retraction condition being satisfied, the cleaning robot to retract the extendable cleaner.

In an exemplary embodiment of the present disclosure, the method also includes: determining, in response to determining that a reset signal is not received within a first preset duration after a second control instruction is issued, that the extendable cleaner has a retraction abnormality, and controlling the cleaning robot to extend the extendable cleaner and retract the extendable cleaner again, where the second control instruction is used for controlling the cleaning robot to retract the extendable cleaner; and the reset signal is used for indicating that the extendable cleaner has been retracted to a designated position.

In an exemplary embodiment of the present disclosure, the method also includes: controlling the cleaning robot to rotate by a preset angle.

In an exemplary embodiment of the present disclosure, the retraction condition includes at least one of: the cleaning robot leaving the included angle area; or an extension duration of the extendable cleaner reaching a second preset duration.

In a second aspect, the present disclosure provides an apparatus for controlling a cleaning robot. The cleaning robot includes an extendable cleaner, and a first projection of the extendable cleaner on a horizontal plane when the extendable cleaner is extended is at least partially located outside a second projection of a body of the cleaning robot on the horizontal plane; the apparatus includes: a cleaner control module, configured to control, in response to detecting that the cleaning robot enters an included angle area, the cleaning robot to extend the extendable cleaner, where the included angle area is an area determined based on an included angle formed by intersection of two obstacle edges; and a cleaner cleaning module, configured to control the cleaning robot to move within the included angle area and clean the included angle area by means of the extendable cleaner during a moving process.

In a third aspect, the present disclosure provides a computer-readable storage medium storing a computer program, where the computer program, when run by a processor, causes the processor to implement the method described above.

In a fourth aspect, the present disclosure provides an electronic device. The electronic device includes: a processor; and a memory, configured to store executable instructions of the processor; where the processor is configured to perform the method described above by executing the executable instructions.

The exemplary embodiments of the present disclosure have the following beneficial effects.

In response to detecting that a cleaning robot enters an included angle area, the cleaning robot is controlled to extend an extendable cleaner; the included angle area is an area determined based on an included angle formed by intersection of two obstacle edges. The cleaning robot is controlled to move within the included angle area and clean the included angle area by means of the extendable cleaner during a moving process. On the one hand, according to the exemplary embodiments, a new method for controlling a cleaning robot is provided. In the method, the cleaning robot may be controlled to extend an extendable cleaner when the cleaning robot enters an included angle area, so as to expand a cleaning range of the cleaning robot by means of the extendable cleaner capable of extending outside the projection of the body of the cleaning robot on the horizontal plane, and effectively clean the included angle area serving as a special application scenario. On the other hand, according to the exemplary embodiments, the cleaning robot may be controlled to move within the included angle area while extending the extendable cleaner, so as to make the extendable cleaner coordinate with a moving state of the cleaning robot, thereby improving the cleaning efficiency of the cleaning robot in the included angle area.

It should be understood that both the foregoing general description and the following detailed description are exemplary and explanatory only and are not construed as limiting the present disclosure.

### BRIEF DESCRIPTION OF THE DRAWINGS

The drawings, which are incorporated into and constitute a part of the specification, illustrate embodiments consistent with the present disclosure and are used in conjunction with the specification to explain the principles of the present disclosure. Apparently, the drawings in the following description show merely some embodiments of the present disclosure, and those of ordinary skill in the art may still derive other drawings from these drawings without creative efforts.
FIG. 1 illustratively shows a schematic structural diagram of a cleaning robot according to an exemplary embodiment.
FIG. 2 illustratively shows a flowchart of a method for controlling a cleaning robot according to an exemplary embodiment.
FIG. 3 illustratively shows a schematic diagram of an included angle area according to an exemplary embodiment.
FIG. 4 illustratively shows a schematic diagram of another included angle area according to an exemplary embodiment.
FIG. 5 illustratively shows a sub-flowchart of a method for controlling a cleaning robot according to an exemplary embodiment.
FIG. 6 illustratively shows a structural block diagram of an apparatus for controlling a cleaning robot according to an exemplary embodiment.
FIG. 7 illustratively shows an electronic device for implementing the above method according to an exemplary embodiment.

### DETAILED DESCRIPTION

For clearer descriptions of the objectives, technical solutions, and advantages of the present disclosure, the present disclosure is further described in detail hereinafter with reference to the drawings. Apparently, the described embodiments are merely some embodiments of the present disclosure, rather than all of the embodiments. Based on the embodiments in the present disclosure, all other embodiments obtained by those of ordinary skill in the art without creative efforts shall fall within the scope of protection of the present disclosure.

The terms used in the embodiments of the present disclosure are for the purpose of describing particular embodiments only and are not intended to be limiting to the present disclosure. As used in the embodiments and the appended claims of the present disclosure, the singular forms "a", "an", and "the" are intended to include the plural forms as well, unless the context clearly indicates otherwise, and "a plurality of" generally includes at least two.

It should be understood that the term "and/or" as used herein is merely a description of an association relationship between associated objects, indicating that three possible relationships may exist. For example, "A and/or B" may represent: the presence of A alone, the simultaneous presence of A and B, and the presence of B alone. In addition, the character "/" herein generally indicates an "or" relationship between the associated objects before and after.

It should be understood that although the terms "first", "second", "third", etc. may be used in the embodiments of the present disclosure to describe ..., these ... should not be limited by these terms. These terms are only used for distinction. For example, without departing from the scope of the embodiments of the present disclosure, "a first ..." may also be referred to as "a second ...", and similarly, "a second ..." may also be referred to as "a first ...".

Depending on the context, the term "if" as used herein may be interpreted as "when", or "in response to determining", or "in response to detecting". Similarly, depending on the context, the phrases "if it is determined" or "if (a stated condition or event) is detected" may be interpreted as "when it is determined" or "in response to determining", or "when (a stated condition or event) is detected" or "in response to detecting (a stated condition or event)".

It should be further noted that the terms "comprise", "include", or any other variants thereof are intended to encompass a non-exclusive inclusion, such that a commodity or an apparatus including a list of elements includes not only those elements, but also other elements not explicitly listed or inherent to such commodity or apparatus. Without further limitation, an element defined by the phrase "comprising a/an..." or "including a/an..." does not exclude the presence of other identical elements in the commodity or apparatus including the element.

The cleaning robot is a type of smart home appliance that may rely on a certain degree of artificial intelligence to automatically complete floor cleaning work in a room. Sweeping and/or vacuuming methods and the like may be adopted to first draw floor debris into a garbage storage box of the cleaning robot, thereby completing a floor cleaning function.

However, when encountering obstacle corners such as wall corners during a cleaning process, the cleaning robot often has difficulty performing effective cleaning, resulting in the occurrence of missed cleaning and the like, and affecting the cleaning effect.

Therefore, when cleaning the obstacle corners, such as the wall corners, during the cleaning process of the cleaning robot, a side brush may be used for cleaning. However, when the side brush is used for cleaning work in the related art, on the one hand, a fixed side brush having poor flexibility is used, and the fixed side brush is easily subjected to collision or squeezing by obstacles during application; on the other hand, when using the side brush, the cleaning robot needs to stop moving at a fixed position to perform cleaning, resulting in unsmooth movement of the cleaning robot and low cleaning efficiency.

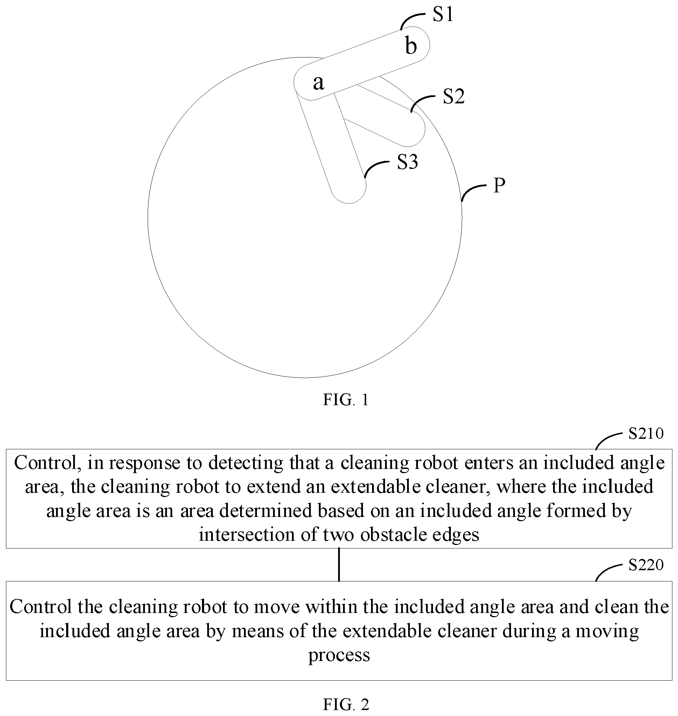

Based on this, an exemplary embodiment of the present disclosure provides a method for controlling a cleaning robot. The method is applicable to a cleaning robot, and the cleaning robot may implement the method via hardware and/or software. In this exemplary embodiment, the cleaning robot includes an extendable cleaner. A first projection of the extendable cleaner on a horizontal plane when the extendable cleaner is extended is at least partially located outside a second projection of a body of the cleaning robot on the horizontal plane, so as to ensure that when the cleaning robot extends the extendable cleaner, a cleaning range of the extendable cleaner may exceed a projection range of the body of the cleaning robot on the horizontal plane. The extendable cleaner refers to a cleaning apparatus capable of extending and retracting changes. The cleaning apparatus may realize environmental cleaning work by means of a cleaning medium of different materials or forms, including a cleaning cloth or a cleaning brush. An extension and retraction manner of the extendable cleaner may be rotary extension and retraction. For example, as shown in FIG. 1, a certain reference point a on the body of the cleaning robot P is taken as a center of a circle, and a mechanical arm having a preset length is taken as a radius; by means of rotation, another end b of the mechanical arm, opposite to the center a of the circle, is rotated out from an S2 or S3 position to an S1 position outside the body of the cleaning robot, so as to perform a cleaning task by means of a cleaning medium configured on the mechanical arm, or the another end b of the mechanical arm is retracted to the S2 or S3 position within the body of the cleaning robot, and the like. The extension and retraction manner may also be sliding extension and retraction. For example, based on operations such as pushing and pulling between an extendable inner rod and a tube sleeve, an extendable arm is extended or retracted. In addition, the above cleaning robot may also include other apparatuses, such as configuring a cleaning roller at a bottom of the cleaning robot to clean the floor, and the like.

Referring to FIG. 2, a flowchart of a method for controlling a cleaning robot according to an exemplary embodiment of the present disclosure is shown, and the method may include the following steps S210 to S220.

In step S210, in response to detecting that the cleaning robot enters an included angle area, the cleaning robot is controlled to extend an extendable cleaner; the included angle area is an area determined based on an included angle formed by intersection of two obstacle edges.

The included angle area refers to an obstacle edge area formed by the intersection of obstacle edges, and the obstacle may be any object having an edge or capable of forming an obstacle edge, such as a wall, a step, a cabinet, or a box. In this exemplary embodiment, the included angle area may be an area determined by an included angle formed by the intersection of edges of the same type of obstacles, such as a wall corner area, and may also be an area determined by an included angle formed by the intersection of edges of different types of obstacles, such as an included angle area formed by the intersection of one side of a cabinet and one side of a wall.

In a working state, the cleaning robot may perform a positioning task or a target detection task by means of various sensors or functional modules, to determine the position of the cleaning robot or perform identification or detection on an item in an environment, and the like, for example, perform identification on the included angle areas such as wall corners or cabinet corners. When detecting that the cleaning robot enters the included angle area, the cleaning robot may be controlled to extend the extendable cleaner.

In an exemplary embodiment, controlling, in response to detecting that the cleaning robot enters the included angle area, the cleaning robot to extend the extendable cleaner may include the following step.

In response to detecting that the included angle formed by the intersection of the two obstacle edges exists in a to-be-cleaned area, and distances between the cleaning robot and the two obstacle edges are both less than a reference dimension of the cleaning robot, the cleaning robot is controlled to extend the extendable cleaner. That is, when it is detected that the included angle formed by the intersection of two obstacle edges exists in the to-be-cleaned area, and the distances between the cleaning robot and the two obstacle edges are both less than the reference dimension of the cleaning robot, it may be determined that the cleaning robot is detected to enter the included angle area.

The to-be-cleaned area refers to an area where the cleaning robot needs to perform a cleaning task, and the to-be-cleaned area may be an entire area in the environment, an uncleaned area in the environment, a certain preset area, or the like. In this exemplary embodiment, the included angle area may be defined as an included angle formed by the intersection of two obstacle edges in the to-be-cleaned area, with the distances between the cleaning robot and the two obstacle edges both being less than the reference dimension of the cleaning robot. After detecting that the cleaning robot enters an area meeting the requirement in the to-be-cleaned area, a determination is made that the cleaning robot enters the included angle area. The reference dimension may be preset according to actual needs or scenario needs, for example, customizing a reference dimension according to a user preference; the reference dimension may also be determined according to a dimension of the cleaning robot itself, for example, a diameter dimension of a circular robot.

In an exemplary embodiment, if the body of the cleaning robot is circular, the reference dimension is the diameter of the body; if the body of the cleaning robot is polygonal, the reference dimension is the length of one side of the body.

In this exemplary embodiment, the reference dimension may serve as a determination condition for whether to trigger the cleaning robot to extend the extendable cleaner. When the body of the cleaning robot is circular, the reference dimension may be the diameter of the body of the cleaning robot; that is, when it is detected that the cleaning robot enters an included angle area, where in the included angle area, an included angle is formed by the intersection of two obstacle edges, and distances between the cleaning robot and the two obstacle edges are less than the diameter of the cleaning robot, the extendable cleaner may be extended. When the body of the cleaning robot is polygonal, the reference dimension may be the length of one side of the body of the cleaning robot; the side length may be a randomly selected side length, the length of one customized side, or the minimum side length of the polygon. For example, when it is detected that the cleaning robot enters an included angle area, where in the included angle area, an included angle is formed by the intersection of two obstacle edges, and distances between the cleaning robot and the two obstacle edges are less than the minimum side length of the cleaning robot, the extendable cleaner may be extended.

In an exemplary embodiment, the included angle formed by the intersection of two obstacle edges may be an included angle within a preset angle range.

In this exemplary embodiment, the angle of the included angle in the included angle area may be limited, such that when the cleaning robot identifies an included angle area having a specific included angle, an included angle area cleaning mode is enabled, and the extendable cleaner is extended to clean the included angle area, while a normal cleaning mode is executed in a non-included angle area where the specific included angle is not identified. A lower limit of the preset angle range may be set to 0, and an upper limit thereof may be set to 180°. For example, included angles of 9°, 120°, or the like may all be regarded as the included angle areas. In addition, the preset angle range may also be set to [60°, 120°].

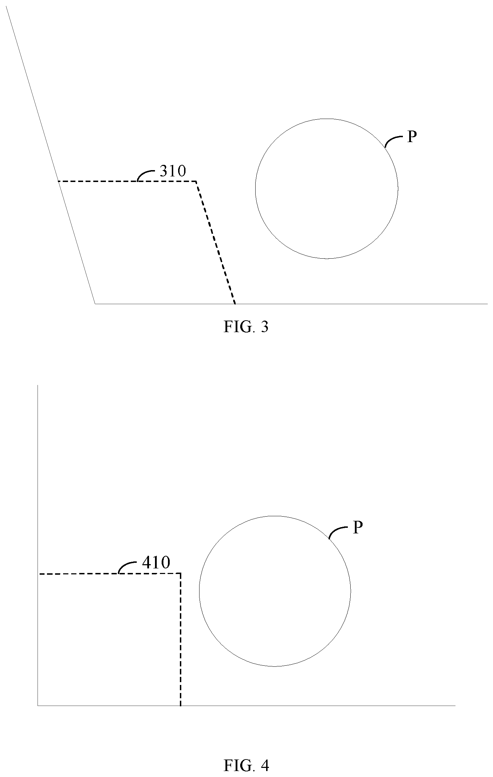

FIGs 3 to FIG. 4 show schematic diagrams of included angle areas corresponding to included angles of different preset angle ranges, where P represents the cleaning robot. FIG. 3 shows a schematic diagram of an included angle area 310 under a 120° included angle, and FIG. 4 shows a schematic diagram of an included angle area 410 under a 90° included angle.

In step S220, the cleaning robot is controlled to move within the included angle area and clean the included angle area by means of the extendable cleaner during a moving process.

After entering the included angle area, the cleaning robot may move within the included angle area. The movement may be a linear movement, a curved movement, a rotary movement, or the like, and may also be a one-time movement, a reciprocating movement, or the like. During the movement, since the cleaning robot extends the extendable cleaner, the included angle area may be cleaned by the extendable cleaner. When the cleaning robot cleans in the included angle area, the cleaning robot may maintain a continuously moving state without stopping. In this way, it may be ensured that the extendable cleaner in an extended state coordinates with a moving state of the cleaning robot to perform continuous cleaning on the included angle area.

In an exemplary embodiment, controlling the cleaning robot to move within the included angle area includes the following step.

The cleaning robot is controlled to move within the included angle area at a first movement speed; the first movement speed is less than a second movement speed of the cleaning robot outside the included angle area.

Considering that the included angle area usually has characteristics such as being narrow, cramped, and concave, the included angle area is not easy to clean. Therefore, to ensure that the cleaning robot may accurately and effectively clean the included angle area, in this exemplary embodiment, the cleaning robot may be set to move within the included angle area at the first movement speed, where the first movement speed is less than the second movement speed of the cleaning robot outside the included angle area. Specifically, the magnitude of the first movement speed may be customized as needed or may be set according to the magnitude of the second movement speed. For example, the first movement speed is set to be half or two-thirds of the second movement speed, which is not specifically limited in the present disclosure.

In an exemplary embodiment, the above method for controlling the cleaning robot may also include the following step.

When the cleaning robot needs to rotate within the included angle area, the cleaning robot is controlled to rotate at a first rotation speed; the first rotation speed is less than a second rotation speed of the cleaning robot outside the included angle area.

The cleaning robot, when moving within the included angle area, may also perform a rotary movement. Considering that when the cleaning robot rotates in an area outside the included angle area, rotation of the cleaning robot is mostly for changing direction, whereas in this exemplary embodiment, the range of the included angle area is relatively small, and when the cleaning robot rotates within the included angle area, the purpose is not only to change direction, but also to effectively clean an area covered by the extendable cleaner during a rotating process. Therefore, to ensure cleaning efficiency, when the cleaning robot needs to rotate within the included angle area, the rotation speed may be limited in this exemplary embodiment. Specifically, the cleaning robot may be controlled to rotate at the first rotation speed, and the first rotation speed is less than the second rotation speed of the cleaning robot outside the included angle area. The configuration of the first rotation speed and the second rotation speed may be set according to specific needs. The first rotation speed and the second rotation speed may have an association relationship; for example, the first rotation speed is half of the second rotation speed. The first rotation speed and the second rotation speed may also have no corresponding relationship, which is not specifically limited in the present disclosure.

In an exemplary embodiment, the above method for controlling the cleaning robot may also include the following steps.

A first electrical signal value used for controlling the extendable cleaner is acquired before issuing a first control instruction; the first control instruction is used for controlling the cleaning robot to extend the extendable cleaner.

A second electrical signal value used for controlling the extendable cleaner is monitored during a process of extending the extendable cleaner.

If a difference between the second electrical signal value and the first electrical signal value reaches a preset threshold, it is determined that the extendable cleaner has an extension abnormality, and the cleaning robot is controlled to retract the extendable cleaner and extend the extendable cleaner again.

The first control instruction refers to an instruction used for controlling the cleaning robot to extend the extendable cleaner. For example, when it is detected that the cleaning robot enters the included angle area, the first control instruction is issued. The electrical signal value refers to current data of the extendable cleaner during an extension and retraction process, and the first electrical signal value and the second electrical signal value may be current data corresponding to different timestamps. For example, before issuing the first control instruction, a current value A, i.e., the first electrical signal value, of the extendable cleaner is recorded. The process of extending the extendable cleaner may be an entire extension process or a preset time period of the extension process, for example, an extension process within 600 ms (milliseconds). In this process, the second electrical signal value may be monitored. For example, a current value B is recorded once every 20 ms within 600 ms, and the current value B may be used as the second electrical signal value. Whether the extendable cleaner has an extension abnormality is determined by comparing whether the difference between the second electrical signal value and the first electrical signal value reaches the threshold. For example, whether the extendable cleaner has an extension abnormality may be determined by a formula: the second electrical signal value B - the first electrical signal value A ≥ k. k may be set according to specific situations or be calculated and obtained according to a specific formula. In this exemplary embodiment, k = preset parameter/A may be set, where the preset parameter may be set as k = 0.4. When it is determined that the extendable cleaner has an extension abnormality, the cleaning robot may be controlled to receive the extendable cleaner and perform the operation of extending again.

In an exemplary embodiment, the above method for controlling the cleaning robot may also include the following step.

If an extension abnormality exists in all M consecutive extensions of the extendable cleaner, extension of the extendable cleaner is disabled.

According to this exemplary embodiment, during a process of extending the extendable cleaner, whether the extendable cleaner has an extension abnormality may be determined by monitoring the second electrical signal value, and the operation of retracting and extending the extendable cleaner is repeatedly performed. To avoid wasting power consumption, a configuration may be made that, if an abnormality exists in all multiple consecutive extensions of the extendable cleaner, extension of the extendable cleaner is disabled, for example, not continuing to perform the extension operation of the extendable cleaner, and retracting the extendable cleaner to the original position or a specific position, etc., then waiting to trigger an extension of the extendable cleaner when entering an extension and retraction scenario next time.

In an exemplary embodiment, after cleaning the included angle area by means of the extendable cleaner during the moving process, the above method for controlling the cleaning robot may also include the following step.

In response to a retraction condition being satisfied, the cleaning robot is controlled to retract the extendable cleaner.

When the cleaning robot detects that the retraction condition of the extendable cleaner is satisfied, the cleaning robot may be controlled to retract the extendable cleaner. The retraction condition may be a time condition; for example, after detecting that an accumulated time starting from extending the extendable cleaner reaches a preset time length, the retraction condition is satisfied. The retraction condition may be a target detection condition; for example, when the included angle area is not detected, the retraction condition is satisfied. The specific retraction condition may be set according to actual needs, and the retraction condition may be set as one type or a combination of multiple types. The specific implementation may be achieved by means of a specific hardware apparatus, such as a timer or a laser ranging sensor.

In an exemplary embodiment, the above method for controlling the cleaning robot may also include the following step.

If a reset signal is not received within a first preset duration after a second control instruction is issued, it is determined that the extendable cleaner has a retraction abnormality, and the cleaning robot is controlled to extend the extendable cleaner and retract the extendable cleaner again; the second control instruction is used for controlling the cleaning robot to retract the extendable cleaner; the reset signal is used for indicating that the extendable cleaner has been retracted to a designated position.

The second control instruction refers to an instruction for controlling the extendable cleaner to retract, and the first preset duration is a time used for determining whether the extendable cleaner normally retracts. For example, the first preset duration may be a longest time consumed or an average time consumed of a retraction process of the extendable cleaner. For example, the first preset duration may be set as 2 s. The reset signal refers to sensing data used for reflecting that the extendable cleaner returns to a reference position. For example, in the cleaning robot shown in FIG. 1, when the extendable cleaner is at the position S2, the position S2 may be considered as a reset position, corresponding to the reset signal "1"; the position S1 may be considered as an extended target position, corresponding to the signal "0"; and the position S3 may be considered as a safety position, corresponding to the signal "0". When the extendable cleaner of the cleaning robot is subjected to actions such as squeezing or pushing by an obstacle, the extendable cleaner may be forced to retract to the safety position. According to this exemplary embodiment, the sensor data may be acquired by configuring a sensor, such as a Hall sensor, in the cleaning robot to determine a state signal of the extendable cleaner.

If the reset signal is not received within the first preset duration after the second control instruction is issued, it may be considered that the extendable cleaner currently encounters an obstacle or has a problem, and a retraction abnormality exists, causing the extendable cleaner to be unable to normally retract. In this case, the cleaning robot may be controlled to extend the extendable cleaner and perform a retraction operation again to attempt to solve the abnormal problem during the retraction process.

In an exemplary embodiment, before the cleaning robot is controlled to extend the extendable cleaner and retract the extendable cleaner again, the method for controlling the cleaning robot may also include the following step.

The cleaning robot is controlled to rotate by a preset angle.

Considering that the extendable cleaner of the cleaning robot may be stuck by a specific obstacle, causing the extendable cleaner to be unable to retract normally, performing an angle adjustment on the cleaning robot may resolve the situation of the extendable cleaner being stuck by the obstacle. Therefore, in this exemplary embodiment, when the cleaning robot is unable to normally retract the extendable cleaner, before performing the operation of retracting the extendable cleaner again, the cleaning robot may be controlled to rotate to facilitate the adjustment of the orientation of the cleaning robot to attempt to resolve the situation where the extendable cleaner is stuck by an obstacle and unable to normally retract. The preset rotating angle and rotating direction may be random or preset. For example, when the extendable cleaner apparatus shown in FIG. 1 is configured, a rotation to the left by a preset angle of 45° may be set to facilitate the resolving, by means of a reverse rotation, of problems such as the extendable cleaner being stuck or entangled.

In an exemplary embodiment, the above retraction condition may include at least one of: the cleaning robot leaving the included angle area; or an extension duration of the extendable cleaner reaching a second preset duration.

In practical applications, the cleaning robot may perform continuous or periodic detection of the surrounding environment by means of an apparatus or a sensing device configured on the cleaning robot for performing target detection. When it is detected that the cleaning robot leaves the included angle area, for example, it is determined by laser ranging that the distance between the robot and a wall corner exceeds the dimension of the included angle area, or no obstacle such as a wall is detected, it may be determined that the retraction condition is satisfied, and the retraction operation of the extendable cleaner is performed. In addition, a configuration may also be made that, when the extension duration of the extendable cleaner reaches the second preset duration, the retraction condition for retracting the extendable cleaner is triggered. The second preset duration may be determined according to a historical duration of cleaning an included angle area, may be a customized time preset in advance, or may be an estimated duration required for completing the cleaning determined according to the dimension of the included angle area, etc., which is not specifically limited in the present disclosure.

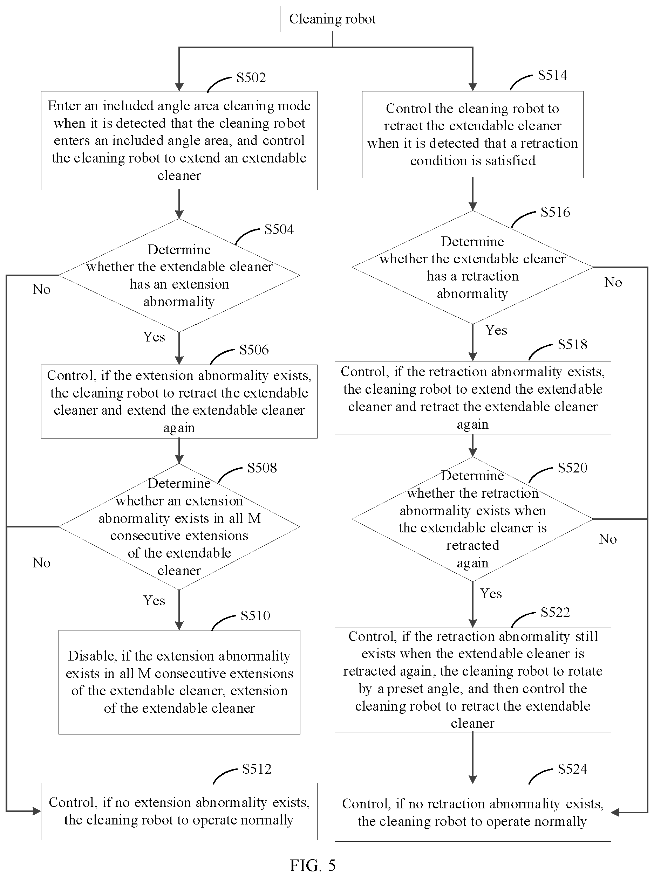

FIG. 5 shows a flowchart of a method for controlling an extendable cleaner, and the method may specifically include the following steps.

In step S502, when it is detected that the cleaning robot enters an included angle area, an included angle area cleaning mode is entered, and the cleaning robot is controlled to extend the extendable cleaner.

In step S504, it is determined whether the extendable cleaner has an extension abnormality.

In step S506, if the extension abnormality exists, the cleaning robot is controlled to retract the extendable cleaner and extend the extendable cleaner again.

In step S508, it is determined whether an extension abnormality exists in all M consecutive extensions of the extendable cleaner.

In step S510, if the extension abnormality exists in all M consecutive extensions of the extendable cleaner, extension of the extendable cleaner is disabled.

In step S512, if no extension abnormality exists, the cleaning robot is controlled to operate normally.

In step S514, when it is detected that a retraction condition is satisfied, the cleaning robot is controlled to retract the extendable cleaner.

In step S516, it is determined whether the extendable cleaner has a retraction abnormality.

In step S518, if the retraction abnormality exists, the cleaning robot is controlled to extend the extendable cleaner and retract the extendable cleaner again.

In step S520, it is determined whether the retraction abnormality exists when the extendable cleaner is retracted again.

In step S522, if the retraction abnormality still exists when the extendable cleaner is retracted again, the cleaning robot is controlled to rotate by a preset angle, and then the cleaning robot is controlled to retract the extendable cleaner.

In step S524, if no retraction abnormality exists, the cleaning robot is controlled to operate normally.

Based on the above description, in this exemplary embodiment, in response to detecting that the cleaning robot enters the included angle area, the cleaning robot is controlled to extend the extendable cleaner; the included angle area is an area determined based on an included angle formed by the intersection of two obstacle edges; the cleaning robot is controlled to move within the included angle area and clean the included angle area by means of the extendable cleaner during the moving process. On the one hand, according to the exemplary embodiments, a new method for controlling a cleaning robot is provided. In the method, the cleaning robot may be controlled to extend an extendable cleaner when the cleaning robot enters an included angle area, so as to expand a cleaning range of the cleaning robot by means of the extendable cleaner capable of extending outside the projection of the body of the cleaning robot on the horizontal plane, and effectively clean the included angle area serving as a special application scenario. On the other hand, according to the exemplary embodiments, the cleaning robot may be controlled to move within the included angle area while extending the extendable cleaner, so as to make the extendable cleaner coordinate with a moving state of the cleaning robot, thereby improving the cleaning efficiency of the cleaning robot in the included angle area.

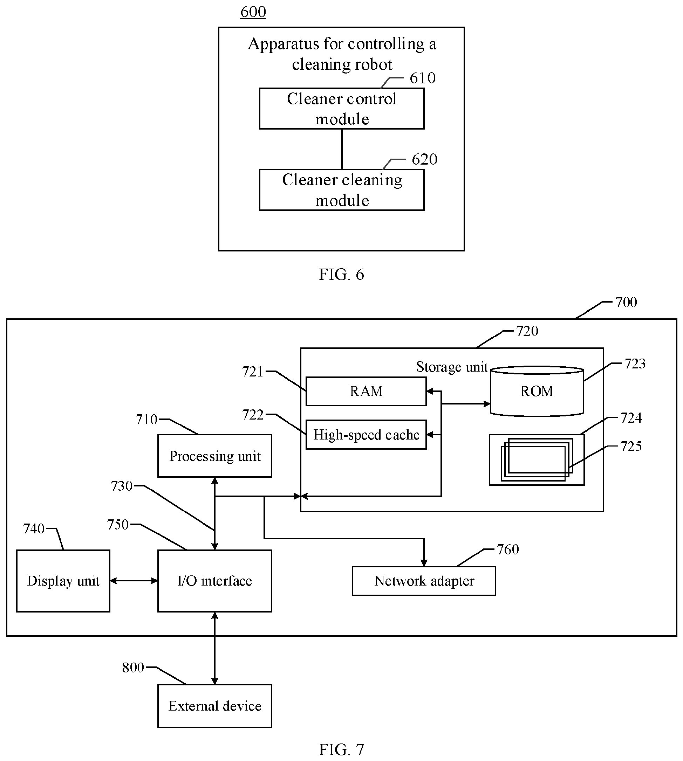

In the exemplary embodiments of the present disclosure, an apparatus for controlling a cleaning robot is also provided. As shown in FIG. 6, the apparatus 600 for controlling the cleaning robot may include: a cleaner control module 610, configured to, in response to detecting that the cleaning robot enters an included angle area, control the cleaning robot to extend an extendable cleaner, where the included angle area is an area determined based on an included angle formed by intersection of two obstacle edges; and a cleaner cleaning module 620, configured to control the cleaning robot to move within the included angle area and clean the included angle area by means of the extendable cleaner during a moving process.

In an exemplary embodiment of the present disclosure, the cleaner control module includes: an included angle detection unit, configured to detect whether an included angle formed by the intersection of two obstacle edges exists in a to-be-cleaned area, and whether distances between the cleaning robot and the two obstacle edges are both less than a reference dimension of the cleaning robot.

In an exemplary embodiment of the present disclosure, if the body of the cleaning robot is circular, the reference dimension is the diameter of the body; if the body of the cleaning robot is polygonal, the reference dimension is the length of one side of the body.

In an exemplary embodiment of the present disclosure, the included angle detection unit is configured to detect whether an included angle, formed by the intersection of two obstacle edges and falling within a preset angle range, exists in the to-be-cleaned area.

In an exemplary embodiment of the present disclosure, the cleaner cleaning module includes: a movement speed control unit, configured to control the cleaning robot to move at a first movement speed within the included angle area. The first movement speed is less than a second movement speed of the cleaning robot outside the included angle area.

In an exemplary embodiment of the present disclosure, the apparatus for controlling the cleaning robot also includes: a rotation speed control unit, configured to, when the cleaning robot needs to rotate within the included angle area, control the cleaning robot to rotate at a first rotation speed. The first rotation speed is less than a second rotation speed of the cleaning robot outside the included angle area.

In an exemplary embodiment of the present disclosure, the apparatus for controlling the cleaning robot also includes: a first signal value acquisition unit, configured to acquire, before issuing a first control instruction, a first electrical signal value used for controlling the extendable cleaner, where the first control instruction is used for controlling the cleaning robot to extend the extendable cleaner; a second signal value monitoring unit, configured to monitor, during a process of extending the extendable cleaner, a second electrical signal value used for controlling the extendable cleaner; and a signal value difference determination unit, configured to, if a difference between the second electrical signal value and the first electrical signal value reaches a preset threshold, determine that the extendable cleaner has an extension abnormality, and control the cleaning robot to retract the extendable cleaner and extend the extendable cleaner again.

In an exemplary embodiment of the present disclosure, the apparatus for controlling the cleaning robot also includes: an extension abnormality detection unit, configured to, if an extension abnormality exists in all M consecutive extensions of the extendable cleaner, disable extension of the extendable cleaner.

In an exemplary embodiment of the present disclosure, after the included angle area is cleaned by means of the extendable cleaner during the moving process, the apparatus for controlling the cleaning robot also includes: a retraction condition determination unit, configured to, in response to a retraction condition being satisfied, control the cleaning robot to retract the extendable cleaner.

In an exemplary embodiment of the present disclosure, the apparatus for controlling the cleaning robot also includes: a reset signal determination unit, configured to, if a reset signal is not received within a first preset duration after a second control instruction is issued, determine that the extendable cleaner has a retraction abnormality, and control the cleaning robot to extend the extendable cleaner and retract the extendable cleaner again. The second control instruction is used for controlling the cleaning robot to retract the extendable cleaner; the reset signal is used for indicating that the extendable cleaner has been retracted to a designated position.

In an exemplary embodiment of the present disclosure, before the cleaning robot is controlled to extend the extendable cleaner and retract the extendable cleaner again, the apparatus for controlling the cleaning robot also includes: an angle rotation control unit, configured to control the cleaning robot to rotate by a preset angle.

In an exemplary embodiment of the present disclosure, the retraction condition includes at least one of: the cleaning robot leaving the included angle area; or an extension duration of the extendable cleaner reaching a second preset duration.

The specific details of the respective modules of the apparatus for controlling the cleaning robot described above have been described in detail in the corresponding method for controlling the cleaning robot, and therefore will not be repeated herein.

It should be noted that although several modules or units of the device for execution are mentioned in the detailed description above, such a division is not mandatory. In practice, according to the embodiments of the present disclosure, the features and functions of two or more modules or units described above may be embodied in one module or unit. Conversely, the features and functions of one module or unit described above may be further divided and embodied by a plurality of modules or units.

In the exemplary embodiments of the present disclosure, an electronic device capable of implementing the above method is also provided. For example, the electronic device may be a cleaning robot capable of implementing the above method.

Those skilled in the art may understand that various aspects of the present disclosure may be implemented as systems, methods, or program products. Therefore, various aspects of the present disclosure may be specifically implemented in the form of a complete hardware embodiment, a complete software embodiment (including firmware, microcode, etc.), or an embodiment combining hardware and software, which may be collectively referred to as a "circuit", "module" or "system" herein.

An electronic device 700 according to the exemplary embodiments of the present disclosure is described below with reference to FIG. 7. The electronic device 700 shown in FIG. 7 is only an example, and should not bring any limitation to the functions and the use scope of the embodiments of the present disclosure.

As shown in FIG. 7, the electronic device 700 is present in a form of a general-purpose computing device. Components of the electronic device 700 may include, but are not limited to, at least one processing unit 710, at least one storage unit 720, a bus 730 connecting different system components (including the storage unit 720 and the processing unit 710), and a display unit 740.

The storage unit stores program code, and the program code may be executed by the processing unit 710 to cause the processing unit 710 to perform the steps according to the various exemplary embodiments of the present disclosure described in the above "exemplary method" section of the specification. For example, the processing unit 710 may perform the steps shown in FIG. 2.

The storage unit 720 may include a readable medium in a form of a volatile storage unit, for example, a random access memory (RAM) 721 and/or a high-speed cache memory 722, and may also include a read-only memory (ROM) 723.

The storage unit 720 may also include a program/utility 724 having a set of (at least one) program modules 725, such program modules 725 including, but not limited to: an operating system, one or more application programs, other program modules, and program data, where each of these examples or some combination thereof may include an implementation of a network environment.

The bus 730 may represent one or more of several types of bus structures, including a storage unit bus or a storage unit controller, a peripheral bus, a graphics acceleration port, a processing unit, or a local bus using any of a plurality of bus structures.

The electronic device 700 may also communicate with one or more external devices 800 (such as a keyboard, a pointing device, a Bluetooth device, etc.), and may also communicate with one or more devices that enable a user to interact with the electronic device 700, and/or communicate with any device (such as a router, a modem, etc.) that enables the electronic device 700 to communicate with one or more other computing devices. Such communication may be implemented through an input/output (I/O) interface 750. In addition, the electronic device 700 may also communicate with one or more networks (such as a local area network (LAN), a wide area network (WAN), and/or a public network, such as the Internet) via a network adapter 760. As shown in the figure, the network adapter 760 communicates with other modules of the electronic device 700 via the bus 730. It should be understood that although not shown in the figures, other hardware and/or software modules may be used in conjunction with the electronic device 700, including, but not limited to: microcode, device drivers, redundant processing units, external disk drive arrays, RAID systems, tape drivers, data backup storage systems, and the like.

Based on the description of the foregoing embodiments, a person skilled in the art may easily understand that the exemplary embodiments described herein may be implemented by software, or may be implemented by software in combination with necessary hardware. Therefore, the technical solutions according to the embodiments of the present disclosure may be embodied in the form of a software product. The software product may be stored in a non-volatile storage medium (which may be a CD-ROM, a USB flash drive, a mobile hard disk, or the like) or on a network, and includes several instructions that enable a computing device (which may be a personal computer, a server, a terminal apparatus, a network device, or the like) to perform the method according to the embodiments of the present disclosure.

In the exemplary embodiments of the present disclosure, a computer-readable storage medium is also provided. The computer-readable storage medium stores a program product capable of implementing the method described above in the specification. In some possible embodiments, various aspects of the present disclosure may also be implemented in the form of a program product. The program product includes program code. When the program product is run on a terminal device, the program code is configured to cause the terminal device to perform the steps according to the various exemplary embodiments of the present disclosure described in the above "exemplary method" section of the specification.

The program product for implementing the above method according to the embodiments of the present disclosure may adopt a portable compact disc read-only memory (CD-ROM) and include program code, and may be run on a terminal device, such as a personal computer. However, the program product of the present disclosure is not limited thereto. In this document, the readable storage medium may be any tangible medium containing or storing a program, and the program may be used by or used in combination with an instruction execution system, apparatus, or device.

The program product may adopt any combination of one or more readable media. The readable medium may be a readable signal medium or a readable storage medium. The readable storage medium may be, for example, but is not limited to, an electrical, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

The computer-readable signal medium may include a data signal propagated in a baseband or as part of a carrier wave, and readable program code is carried in the data signal. Such a propagated data signal may take a variety of forms, including but not limited to an electromagnetic signal, an optical signal, or any suitable combination of the above. The readable signal medium may also be any readable medium other than the readable storage medium. The readable medium may send, propagate, or transmit a program to be used by or used in combination with an instruction execution system, apparatus, or device.

The program code contained on the readable medium may be transmitted using any appropriate medium, including but not limited to a wireless medium, a wired medium, an optical cable, RF, or any suitable combination of the above.

The program code for performing the operations of the present disclosure may be written in any combination of one or more programming languages. The programming languages include an object-oriented programming language, such as Java or C++, and also include a conventional procedural programming language, such as the "C" language or a similar programming language. The program code may be executed entirely on a user computing device, partly on a user device, as a stand-alone software package, partly on a user computing device and partly on a remote computing device, or entirely on a remote computing device or a server. In a case involving a remote computing device, the remote computing device may be connected to a user computing device via any kind of network, including a local area network (LAN) or a wide area network (WAN), or the remote computing device may be connected to an external computing device (for example, connected via the Internet using an Internet service provider).

In addition, the above drawings are merely schematic illustrations of the processes included in the method according to the exemplary embodiments of the present disclosure, and are not for a limiting purpose. As may be easily understood, the processes shown in the above drawings do not indicate or limit the chronological order of these processes. In addition, as may also be easily understood, these processes may be, for example, executed synchronously or asynchronously in a plurality of modules.

Other embodiments of the present disclosure are apparent to those skilled in the art from consideration of the specification and practice of the present disclosure disclosed herein. The present disclosure is intended to encompass any variation, use, or adaptation of the present disclosure following the general principles of the present disclosure and including known common knowledge or customary technical means in the art undisclosed in the present disclosure. The specification and embodiments are only considered exemplary, and the true scope and spirit of the present disclosure are indicated in the claims.

It should be appreciated that the present disclosure is not limited to the exact construction that has been described above and illustrated in the drawings, and that various modifications and changes may be made without departing from the scope thereof. The scope of the present disclosure is defined only by the appended claims.

## Claims

1. A method for controlling a cleaning robot, wherein the cleaning robot comprises an extendable cleaner, and a first projection of the extendable cleaner on a horizontal plane when the extendable cleaner is extended is at least partially located outside a second projection of a body of the cleaning robot on the horizontal plane; and the method comprises:
controlling, in response to detecting that the cleaning robot enters an included angle area, the cleaning robot to extend the extendable cleaner, wherein the included angle area is an area determined based on an included angle formed by intersection of two obstacle edges; and
controlling the cleaning robot to move within the included angle area and clean the included angle area by means of the extendable cleaner during a moving process.

2. The method according to claim 1, wherein controlling, in response to detecting that the cleaning robot enters the included angle area, the cleaning robot to extend the extendable cleaner comprises:
controlling the cleaning robot to extend the extendable cleaner in response to detecting that the included angle formed by the intersection of the two obstacle edges exists in a to-be-cleaned area, and distances between the cleaning robot and the two obstacle edges are both less than a reference dimension of the cleaning robot.

3. The method according to claim 2, wherein the body of the cleaning robot is circular, and the reference dimension is a diameter of the body; or the body of the cleaning robot is polygonal, and the reference dimension is a length of one side of the body.

4. The method according to claim 2, wherein the included angle formed by the intersection of the two obstacle edges is an included angle within a preset angle range.

5. The method according to claim 1, wherein controlling the cleaning robot to move within the included angle area comprises:
controlling the cleaning robot to move within the included angle area at a first movement speed, wherein the first movement speed is less than a second movement speed of the cleaning robot outside the included angle area.

6. The method according to claim 1, further comprising:
controlling, in response to determining that the cleaning robot needs to rotate within the included angle area, the cleaning robot to rotate at a first rotation speed, wherein the first rotation speed is less than a second rotation speed of the cleaning robot outside the included angle area.

7. The method according to claim 1, further comprising:
acquiring, before issuing a first control instruction, a first electrical signal value used for controlling the extendable cleaner, wherein the first control instruction is used for controlling the cleaning robot to extend the extendable cleaner;
monitoring, during a process of extending the extendable cleaner, a second electrical signal value used for controlling the extendable cleaner; and
determining, in response to determining that a difference between the second electrical signal value and the first electrical signal value reaches a preset threshold, that the extendable cleaner has an extension abnormality, and controlling the cleaning robot to retract the extendable cleaner and extend the extendable cleaner again.

8. The method according to claim 7, further comprising:
disabling, in response to determining that the extension abnormality exists in all M consecutive extensions of the extendable cleaner, extension of the extendable cleaner.

9. The method according to claim 1, further comprising:
controlling, in response to a retraction condition being satisfied, the cleaning robot to retract the extendable cleaner.

10. The method according to claim 9, further comprising:
determining, in response to determining that a reset signal is not received within a first preset duration after a second control instruction is issued, that the extendable cleaner has a retraction abnormality, and controlling the cleaning robot to extend the extendable cleaner and retract the extendable cleaner again, wherein the second control instruction is used for controlling the cleaning robot to retract the extendable cleaner; and the reset signal is used for indicating that the extendable cleaner has been retracted to a designated position.

11. The method according to claim 10, further comprising:
controlling the cleaning robot to rotate by a preset angle.

12. The method according to claim 10, wherein the retraction condition comprises at least one of: the cleaning robot leaving the included angle area; or an extension duration of the extendable cleaner reaching a second preset duration.

13. An apparatus for controlling a cleaning robot, wherein the cleaning robot comprises an extendable cleaner, and a first projection of the extendable cleaner on a horizontal plane when the extendable cleaner is extended is at least partially located outside a second projection of a body of the cleaning robot on the horizontal plane; and the apparatus comprises:
a cleaner control module, configured to control, in response to detecting that the cleaning robot enters an included angle area, the cleaning robot to extend the extendable cleaner, wherein the included angle area is an area determined based on an included angle formed by intersection of two obstacle edges; and
a cleaner cleaning module, configured to control the cleaning robot to move within the included angle area and clean the included angle area by means of the extendable cleaner during a moving process.

14. A computer-readable storage medium storing a computer program, wherein the computer program, when run by a processor, causes the processor to implement the method for controlling the cleaning robot according to any one of claims 1 to 12.

15. An electronic device, comprising:
a processor; and
a memory, configured to store executable instructions of the processor;
wherein the processor is configured to perform the method for controlling the cleaning robot according to any one of claims 1 to 12 by executing the executable instructions.
